# EUROPÄISCHE PATENTANMELDUNG

(11) **EP 3 501 686 A1**
(43) Veröffentlichungstag der Anmeldung: **26.06.2019**
(21) Anmeldenummer: 17209237.1
(22) Anmeldetag: 21.12.2017
(51) Int. Cl.: B21G 3/16, B21G 3/20, F16B 15/06

(54) **VERFAHREN UND VORRICHTUNG ZUR HERSTELLUNG VON NÄGELN SOWIE NÄGEL**

(71) Anmelder: HILTI Aktiengesellschaft, 9494 Schaan (LI)
(72) Erfinder: Schroeder, Florian, 7304 Maienfeld (CH); Domani, Guenter, 88138 Weissensberg (DE); Rong, Pingyan, 6800 Feldkirch (AT)
(74) Vertreter: Hilti Aktiengesellschaft Corporate Intellectual Property

(57) **Zusammenfassung**

Die Anmeldung betrifft ein Verfahren sowie eine Vorrichtung zur Herstellung von Nägeln, wobei ein Draht zwischen mindestens drei rotierenden Walzen eingequetscht wird, um eine Nagelspitze zu formen und von dem Draht abzutrennen. Weiterhin betrifft die Anmeldung einen Nagel mit einer eine Zugrichtung definierenden Nagelspitze, welche mindestens drei im Wesentlichen in der Zugrichtung verlaufende Grate oder Butzen aufweist.

## Beschreibung

### Technisches Gebiet

Die Erfindung betrifft ein Verfahren sowie eine Vorrichtung zur Herstellung von Nägeln. Die Erfindung betrifft des Weiteren einen Nagel.

### Stand der Technik

Eine Anordnung zum Ablängen von Nagelrohlingen von einem Draht unter gleichzeitiger Ausbildung der Nagelspitze ist zum Beispiel aus der deutschen Patentschrift DE 10 2010 011 735 B3 bekannt. Diese Anordnung umfasst eine Schneideinrichtung, die zwei einander bezüglich der Drahtlängsachse gegenüberliegende, zueinander gegenläufige Schneidwerkzeuge aufweist. Jedes der Schneidwerkzeuge hat ein Schneidmesser, welches von einem Träger gehalten ist. Zum Ablängen der Nagelrohlinge bewegen sich die Schneidmesser auf einer jeweils elliptischen Bahn aufeinander zu.

### Darstellung der Erfindung

Aufgabe der Erfindung ist es, die Herstellung von Nägeln zu vereinfachen und/oder zu verbessern.

Die Aufgabe ist bei einem Verfahren zur Herstellung von Nägeln, bei dem ein Draht in einer Zugrichtung zwischen mehreren rotierenden Walzen hindurchgeführt wird, dadurch gelöst, dass ein erster Abschnitt des Drahtes gleichzeitig zwischen mindestens drei rotierenden Walzen eingequetscht wird, um eine Nagelspitze zu formen und von dem Draht abzutrennen. Bevorzugt wird der erste Abschnitt gleichzeitig zwischen vier oder mehr rotierenden Walzen eingequetscht, um die Nagelspitze zu formen und von dem Draht abzutrennen.

Eine vorteilhafte Ausführungsform ist dadurch gekennzeichnet, dass der Draht fortlaufend in einer einzigen Richtung zwischen den Walzen hindurchgeführt wird.

Eine vorteilhafte Ausführungsform ist dadurch gekennzeichnet, dass beim Einquetschen des Drahtes zwischen den mindestens drei rotierenden Walzen mehrere Einprägungen in der Nagelspitze erzeugt werden, welche aus jeder Richtung senkrecht zur Zugrichtung zumindest einen Hinterschnitt bilden.

Die Aufgabe ist ebenfalls gelöst bei einer Vorrichtung zur Herstellung von Nägeln, mit mehreren rotierenden Walzen, zwischen welchen ein Draht in einer Zugrichtung hindurchführbar ist, indem die Vorrichtung mindestens drei rotierende Walzen umfasst, zwischen welchen ein erster Abschnitt des Drahtes gleichzeitig einquetschbar ist, um eine Nagelspitze zu formen und von dem Draht abzutrennen. Bevorzugt umfasst die Vorrichtung vier rotierende Walzen, zwischen welchen der erste Abschnitt des Drahtes gleichzeitig einquetschbar ist, um die Nagelspitze zu formen und von dem Draht abzutrennen.

Eine vorteilhafte Ausführungsform ist dadurch gekennzeichnet, dass die mindestens drei rotierenden Walzen mehrere Prägestempel zur Erzeugung von Einprägungen in der Nagelspitze aufweisen, welche aus jeder Richtung senkrecht zur Zugrichtung zumindest einen Hinterschnitt bilden. Dies wird insbesondere durch die Anordnung mit mindestens drei rotierenden Walzen ermöglicht.

Die Aufgabe ist weiterhin gelöst bei einem Nagel mit einer eine Zugrichtung definierenden Nagelspitze, welche mindestens drei im Wesentlichen in der Zugrichtung verlaufende Grate oder Butzen aufweist. Bevorzugt weist die Nagelspitze mindestens vier im Wesentlichen in der Zugrichtung verlaufende Grate oder Butzen auf.

Eine vorteilhafte Ausführungsform ist dadurch gekennzeichnet, dass die Nagelspitze mehrere Einprägungen aufweist, welche aus jeder Richtung senkrecht zur Zugrichtung zumindest einen Hinterschnitt bilden.

### Ausführungsbeispiele

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Fig. 1: eine Herstellungsvorrichtung für Nägel,
- Fig. 2: einen Nagel in einer Schnittansicht während seiner Herstellung,
- Fig. 3: einen Nagel während seiner Herstellung und
- Fig. 4: verschiedene Ausführungsformen eines Nagels.

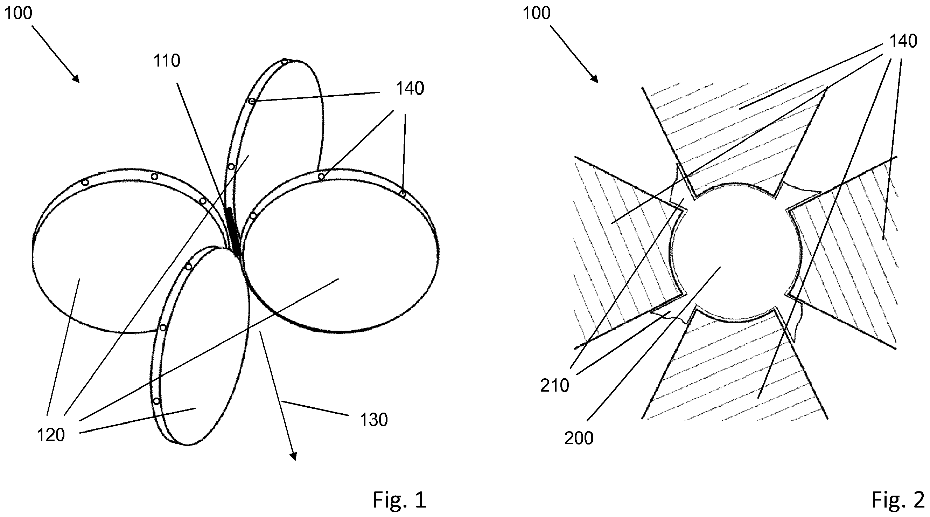

In Figur 1 ist eine Vorrichtung 100 zur Herstellung von Nägeln aus einem Draht 110 dargestellt. Die Vorrichtung 100 weist vier rotierende Walzen 120 auf, zwischen denen der Draht 110 fortlaufend in einer Zugrichtung 130 hindurchführbar ist. Zum Ablängen der Nägel von dem Draht 110 weist jede der Walzen 120 mehrere Kneifwerkzeuge 140 auf, welche am Umfang der jeweiligen Walze 120 angebracht sind. Beim Durchführen zwischen den Walzen 120 wird ein erster Abschnitt des Drahtes 110 gleichzeitig zwischen den Kneifwerkzeugen 140 aller vier Walzen 120 eingequetscht, um eine Nagelspitze zu formen und von dem Draht 110 abzutrennen. In einem nachfolgenden Schritt wird auf einem der Spitze gegenüberliegenden Ende jedes Nagels ein Nagelkopf angeformt, beispielsweise durch Stauchen. Die Kneifwerkzeuge 140 weisen jeweils einen oder mehrere Prägestempel zur Erzeugung von Einprägungen in der Nagelspitze auf, welche aus jeder Richtung senkrecht zur Zugrichtung 130 zumindest einen Hinterschnitt bilden.

In Fig. 2 ist ein Nagel 200 im Querschnitt dargestellt, während er in der Vorrichtung 100 hergestellt wird, insbesondere zwischen den Kneifwerkzeugen 140 aller vier Walzen eingequetscht wird. Aufgrund des gleichzeitigen Einquetschens zwischen den vier Kneifwerkzeugen 140 fliesst ein Teil des Drahtmaterials in Zwischenräume zwischen den Kneifwerkzeugen 140 und bildet jeweils einen Butzen 210.

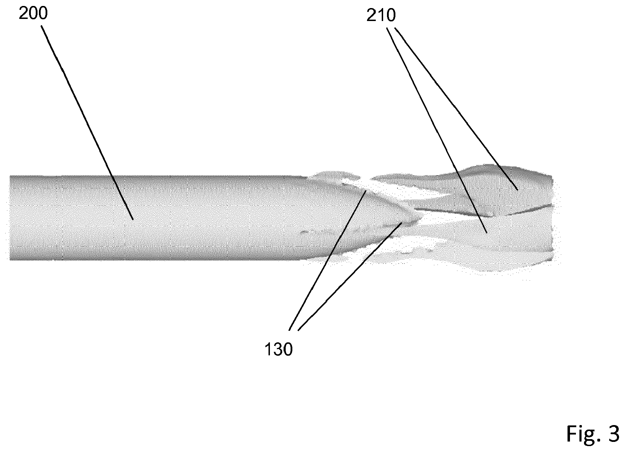

In Fig. 3 ist der Nagel 200 in einer Seitenansicht dargestellt, wobei die Butzen 210 noch während des Kneifens abbrechen und an dem Nagel 200 jeweils eine sichtbare Scherfläche 300 hinterlassen, beispielsweise in Form eines Grates oder eines stehengebliebenen Butzens.

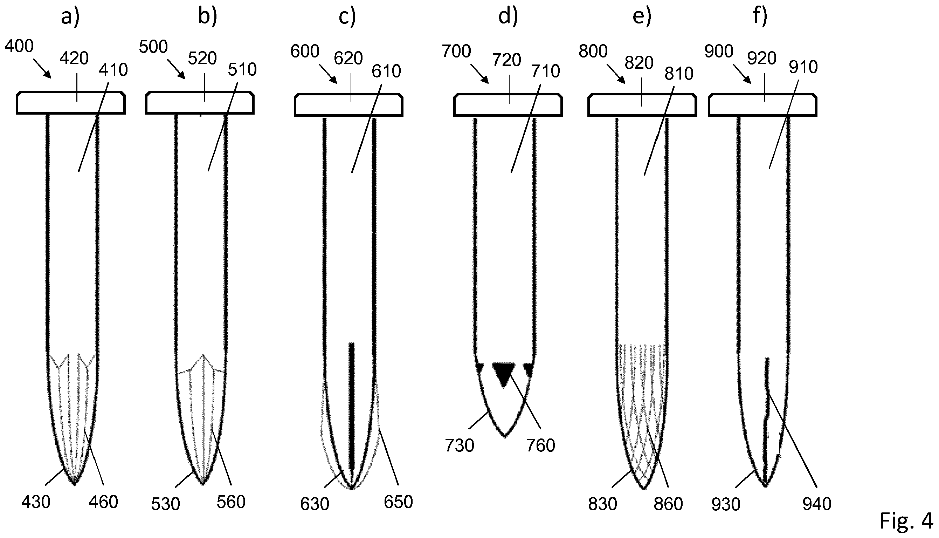

In Fig. 4a) bis 4f) sind verschiedene Ausführungsformen von Nägeln 400, 500, 600, 700, 800, 900 dargestellt, welche mittels der Vorrichtung 100 herstellbar sind, wobei die jeweilige Form der Nägel 400, 500, 600, 700, 800, 900 von den Kneifwerkzeugen 140 vorgegeben ist. Jeder Nagel 400, 500, 600, 700, 800, 900 weist einen Schaft 410, 510, 610, 710, 810, 910 auf, an dessen einem Ende ein Nagelkopf 420, 520, 620, 720, 820, 920 und an dessen anderem Ende eine Nagelspitze 430, 530, 630, 730, 830, 930 angeordnet ist. Die Nagelspitzen 430, 530, 630, 730, 830, 930 weisen jeweils vier im Wesentlichen in der Zugrichtung 130 verlaufende Grate 940 oder Butzen 650 mehrere an den Kneifwerkzeugen 140 angebrachten Prägestempeln vorgegebene Einprägungen 460, 560, 760, 860 auf, welche aus jeder Richtung senkrecht zur Zugrichtung 130 zumindest einen Hinterschnitt bilden. Die Einprägungen umfassen beispielsweise Längskanten oder -nuten 460, 560 und/oder ebene Abflachungen oder Vertiefungen 760 und/oder eine Randrierung 860.

Die Erfindung wurde anhand einer Reihe von Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass die erfindungsgemässe Vorrichtung und das erfindungsgemässe Verfahren auch für andere Anwendungen einsetzbar sind.

## Patentansprüche

1. Verfahren zur Herstellung von Nägeln, bei dem ein Draht in einer Zugrichtung zwischen mehreren rotierenden Walzen hindurchgeführt wird, **dadurch gekennzeichnet, dass** ein erster Abschnitt des Drahtes gleichzeitig zwischen mindestens drei rotierenden Walzen eingequetscht wird, um eine Nagelspitze zu formen und von dem Draht abzutrennen.

2. Verfahren nach Anspruch 1, wobei der erste Abschnitt gleichzeitig zwischen vier oder mehr rotierenden Walzen eingequetscht wird, um die Nagelspitze zu formen und von dem Draht abzutrennen.

3. Verfahren nach einem der vorhergehenden Ansprüche, wobei der Draht fortlaufend in einer einzigen Richtung zwischen den Walzen hindurchgeführt wird.

4. Verfahren nach einem der vorhergehenden Ansprüche, wobei beim Einquetschen des Drahtes zwischen den mindestens drei rotierenden Walzen mehrere Einprägungen in der Nagelspitze erzeugt werden, welche aus jeder Richtung senkrecht zur Zugrichtung zumindest einen Hinterschnitt bilden.

5. Vorrichtung zur Herstellung von Nägeln, mit mehreren rotierenden Walzen, zwischen welchen ein Draht in einer Zugrichtung hindurchführbar ist, **gekennzeichnet durch** mindestens drei rotierende Walzen, zwischen welchen ein erster Abschnitt des Drahtes gleichzeitig einquetschbar ist, um eine Nagelspitze zu formen und von dem Draht abzutrennen.

6. Vorrichtung nach Anspruch 5, **gekennzeichnet durch** mindestens vier rotierende Walzen, zwischen welchen der erste Abschnitt des Drahtes gleichzeitig einquetschbar ist, um die Nagelspitze zu formen und von dem Draht abzutrennen.

7. Vorrichtung nach einem der vorhergehenden Ansprüche, wobei die mindestens drei rotierenden Walzen mehrere Prägestempel zur Erzeugung von Einprägungen in der Nagelspitze aufweisen, welche aus jeder Richtung senkrecht zur Zugrichtung zumindest einen Hinterschnitt bilden.

8. Nagel mit einer eine Zugrichtung definierenden Nagelspitze, **dadurch gekennzeichnet, dass** die Nagelspitze mindestens drei im Wesentlichen in der Zugrichtung verlaufende Grate oder Butzen aufweist.

9. Nagel nach Anspruch 8, wobei die Nagelspitze mindestens vier im Wesentlichen in der Zugrichtung verlaufende Grate oder Butzen aufweist.

10. Nagel nach Anspruch 8 oder 9, wobei die Nagelspitze mehrere Einprägungen aufweist, welche aus jeder Richtung senkrecht zur Zugrichtung zumindest einen Hinterschnitt bilden.
